# EUROPÄISCHE PATENTSCHRIFT

(11) **EP 1 467 119 B1**
(45) Veröffentlichungstag und Bekanntmachung des Hinweises auf die Patenterteilung: **17.05.2006**
(21) Anmeldenummer: 04008394.1
(22) Anmeldetag: 07.04.2004
(51) Int. Cl.: F16F 13/14

(54) **Hydraulisch dämpfendes Gummilager**
Hydraulically damped rubber support
Support caoutchouc à amortissement hydraulique

(30) Priorität: 12.04.2003 DE 10316936
(43) Veröffentlichungstag der Anmeldung: 13.10.2004
(73) Patentinhaber: ZF Boge Elastmetall GmbH, 49448 Lemförde (DE)
(72) Erfinder: Schmitz, Michael, 53115 Bonn (DE)

(56) Entgegenhaltungen:
- EP-A- 0 407 760
- DE-A- 19 749 299
- FR-A- 2 817 312
- GB-A- 2 330 892
- US-A- 3 424 448
- US-A- 3 658 314
- US-A- 4 460 168
- US-A- 4 790 520
- US-A- 5 013 012
- US-A- 5 509 643

## Beschreibung

Die Erfindung bezieht sich auf ein hydraulisch dämpfendes Gummilager Nach dem Oberbegriff des Patentanspruches 1.

Ein gattungsgemäßes Gummilager ist beispielsweise aus der EP 0 407 760 A1 bekannt. Dieses hydraulisch dämpfende Gummilager besteht aus einem Innenteil, einem dazu im Abstand angeordneten Außenteil und dazwischen eingesetztem Gummiteil, in welchem mindestens zwei dämpfungsmittelgefüllte Kammern angeordnet sind, wobei mindestens zwei Kammern über eine Strömungsverbindung miteinander verbunden sind und in mindestens einer Kammer die Volumennachgiebigkeit veränderbar ist. Die Volumennachgiebigkeit wird bei der bekannten Ausführung durch ein Schaumstoffelement erreicht, das auf dem Innenteil befestigt ist.

Aus der US 4,790,520 geht ein hydraulisch dämpfendes Gummilager, bestehend aus einem Innenteil, einem konzentrisch dazu im Abstand angeordneten Außenteil und dazwischen eingesetztem Gummiteil hervor, in welchem mindestens zwei dämpfungsmittelgefüllte Kammern angeordnet sind, wobei mindestens zwei Kammern über eine Strömungsverbindung miteinander verbunden sind und in einer Kammer die Volumennachgiebigkeit durch ein nicht befestigtes, in seinem Volumen nachgiebiges Element veränderbar ist.
Mit einem derartigen Gummilager können radiale Belastungen in nur einer Richtung volumennachgiebig aufgenommen werden.

Es sind ferner Gummilager bekannt (z.B. DE 43 32 480 A1), bei denen zwischen einem Innenteil und einem konzentrisch oder exzentrisch dazu im Abstand angeordneten Außenteil ein Gummiteil dazwischen eingesetzt ist, in welchem mindestens zwei dämpfungsmittelgefüllte Kammern angeordnet sind, wobei diese Kammern über eine kanal- oder drosselförmige strömungsverbindung miteinander verbunden sind. Bei diesen hydraulisch dämpfenden Gummilagern beruht das Dämpfungsprinzip auf der Kanal- oder Drosseldämpfung, wobei konstante Kanal- oder Drosselquerschnitte verwendet werden und auch konstante Kanal- oder Drossellängen. Die Lage des Dämpfungsmaximum hängt unter anderem von dem Kanal- oder Drosselquerschnitt bzw. der Kanal- oder Drossellänge ab. Bei Einsatz eines derartigen Gummilagers, welches Fahrwerksschwingungen sowohl bei Beschleunigung als auch beim Bremsen des Fahrzeuges dämpfen soll, besteht das Problem darin, dass das Maximum des Dämpfungsangebotes für die beiden Lastfälle (Beschleunigung, Bremsen) nicht bei der fahrzeugbedingten Anregungsfrequenz f_{An} (f_{An} liegt meist zwischen 11 und 16 Hz) liegen kann. Die Lage des Dämpfmaximums ist unter anderem eine Funktion der momentanen Steifigkeit. Im Lastfall "Bremsen" ist die Steifigkeit um ein Vielfaches höher als beim Lastfall "Beschleunigung". Hierdurch verschiebt sich das Dämpfmaximum im Lastfall "Bremsen" um ca. 5 Hz nach hinten. Es muss ein Kompromiss erzielt werden, der für beide Belastungen einen prozentualen Anteil der maximal verfügbaren Dämpfung vorsieht.

Aufgabe der Erfindung ist es daher, ein hydraulisch dämpfendes Gummilager zu schaffen, bei dem das Dämpfmaximum bei jedem möglichen Lastfall bei einer bestimmten Frequenz f_{An} liegt.

Zur Lösung dieser Aufgabe ist vorgesehen, dass bei radialer Auslenkung des Außenteiles gegenüber dem Innenteil die Volumennachgiebigkeit in mindestens einer Kammer veränderbar ist und hierzu mindestens ein volumen-variables Zusatzelement in jeder der Kammern unbefestigt angeordnet ist, sodass durch das volumen-variable Zusatzelement und die Strömungsverbindung das Dämpfmaximum bei jedem möglichen Lastfall und/oder Einfederungzustand bei einer bestimmten Frequenz f_{An} liegt

Vorteilhaft ist hierbei, dass die Strömungsverbindung des Gummilagers so ausgelegt ist, dass das Dämpfungsmaximum bei einem praktisch nicht belasteten Gummilager bei einer Frequenz f₁ = f_{An} liegt. Durch Veränderung der Volumennachgiebigkeit in Abhängigkeit der Einfederung (und somit in Abhängigkeit der Steifigkeit) wird erreicht, dass das Maximum der Dämpfung bei jedem Einfederungszustand x bei einer Frequenz fₓ = f_{An} liegt. Weiterer Nebeneffekt des Zusatzelements ist die Reduzierung der technisch bedingten dynamischen Verhärtung um ca. 20 - 30 %.

Des Weiteren kann vorgesehen sein, dass bei radialer Auslenkung des Außenteiles gegenüber dem Innenteil die wirksame Pumpfläche in mindestens einer Kammer veränderbar ist.

Nach einer günstigen Ausführungsform ist vorgesehen, dass das volumen-variable Zusatzelement aus kompressiblem Werkstoff hergestellt ist. Mit Vorteil lässt sich hierbei vorsehen, dass das volumen-variable Zusatzelement aus einem Zell-Kunststoff gebildet ist.

Bevorzugte Ausführungsbeispiele der Erfindung sind in den Zeichnungen schematisch dargestellt.

Es zeigen:
- Figur 1: ein Gummilager in schematischer Darstellung
- Figuren 2 und 3: konstruktive Ausgestaltungen eines Gummilagers.

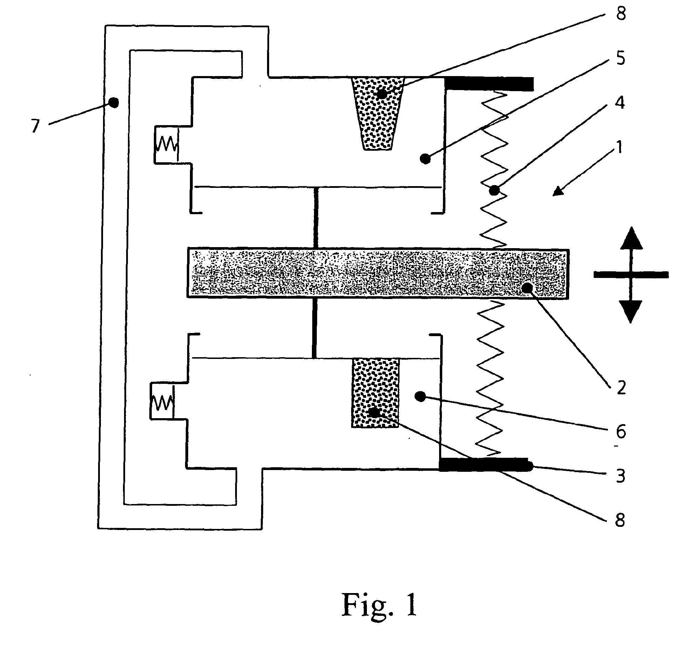

Aus der in Figur 1 dargestellten schematischen Ausführung eines Gummilagers 1 ist das Innenteil 2, das Außenteil 3 sowie das dazwischen eingesetzte Gummiteil 4 zu entnehmen. Zwischen dem Innenteil 2 und dem Außenteil 3 sind im Gummiteil 4 Kammern 5 und 6 angeordnet, die über die Strömungsverbindung 7 miteinander verbunden sind. Bei radialem Einfedern des Außenteiles 3 gegenüber dem Innenteil 2 verkleinert sich die eine Kammer 5, 6 gegenüber der anderen Kammer 6, 5. Hierdurch wird Dämpfungsflüssigkeit aus der einen Kammer über die Strömungsverbindung 7 in die andere Kammer gefördert. Es handelt sich also um ein Dämpfprinzip, welches auf der Drossel- und/oder Kanaldämpfung beruht. Die Strömungsverbindung 7 hat dabei einen konstanten Kanal-/Drosselquerschnitt und eine konstante Kanal-/Drossellänge. Die Lage des Dämpfmaximums hängt unter anderem von diesen beiden Größen ab.

Durch Einbringung eines volumen-variablen Zusatzelementes 8 wird erreicht, dass bei radialer Einfederung des Außenteiles 3 gegenüber dem Innenteil 2 das Zusatzelement 8 an seiner gegenüberliegenden Fläche A zur Anlage kommt. Über die geometrische Ausformung des Zusatzelements kann die Volumennachgiebigkeit in Abhängigkeit der radialen Einfederung gestaltet werden.

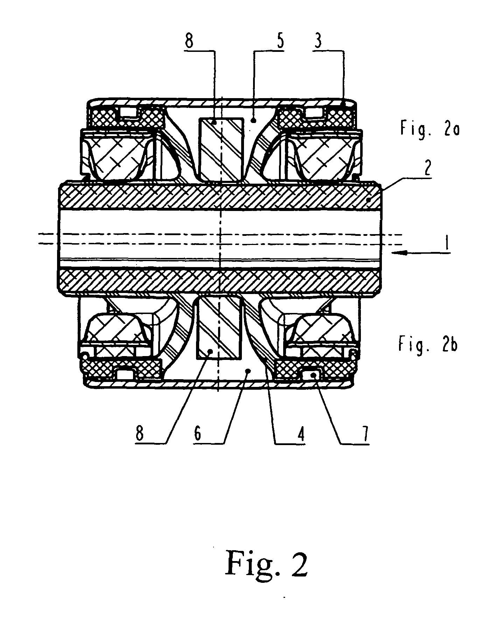

In den Figuren 2a und 2b ist ein Gummilager 1 dargestellt, bei dem das Innenteil 2 und das Außenteil 3 mittels eines Gummiteiles 4 miteinander verbunden sind. Im Gummiteil 4 ist dabei die Kammer 5 bzw. 6 angeordnet, wobei über die Strömungsverbindung 7 eine Verbindung der Kammer 5 mit der Kammer 6 erfolgt. In der Kammer 5 bzw. der Kammer 6 ist ein Zusatzelement 8 angeordnet, welches bei radialer Einfederung an der Innenwandung des Außenteiles 3 zur Anlage kommt und damit die Volumennachgiebigkeit des Gesamtsystems verändert.

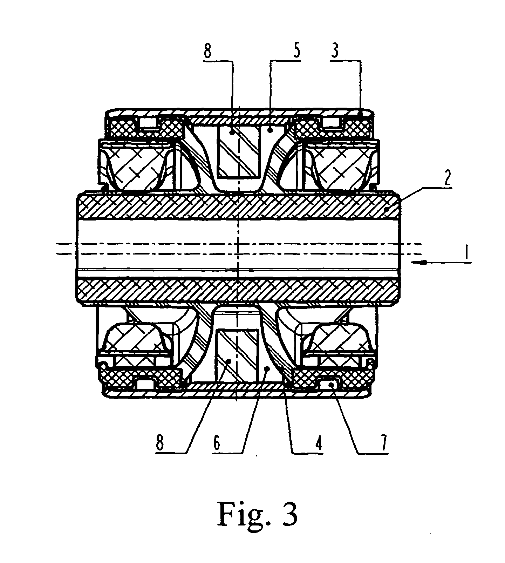

Aus der Figur 3 ist eine weitere Ausführungsform zu entnehmen, bei der in dem Gummiteil 4 die Kammern 5 und 6 angeordnet sind, wobei das Zusatzelement 8 an der Innenwandung des Außenteiles 3 angeordnet ist. Auch bei diesem Ausführungsbeispiel erfolgt eine Änderung der Volumennachgiebigkeit des Gesamtsystems, wenn bei radialer Einfederung des Außenteiles 3 gegenüber dem Innenteil 2 während des Fahrbetriebes das Zusatzelement 8 an der Wandung des Innenteiles 2 zur Anlage kommt. Die Dämpfung erfolgt auch bei diesem Ausführungsbeispiel von der einen Kammer 5, 6 über die Strömungsverbindung 7 zur anderen Kammer 6, 5.

### Bezugszeichenliste

- 1: Gummilager
- 2: Innenteil
- 3: Außenteil
- 4: Gummiteil
- 5: Kammer
- 6: Kammer
- 7: Strömungsverbindung
- 8: volumen-variables Zusatzelement

## Patentansprüche

1. Hydraulisch dämpfendes Gummilager, bestehend aus einem Innenteil, einem konzentrisch oder exzentrisch dazu im Abstand angeordneten Außenteil und dazwischen eingesetztem Gummiteil, in welchem mindestens zwei dämpfungsmittelgefüllte Kammern angeordnet sind, wobei mindestens zwei Kammern über eine Strömungsverbindung miteinander verbunden sind, wobei in mindestens einer Kammer (5, 6) die Volumennachgiebigkeit veränderbar ist,
**dadurch gekennzeichnet, dass**
mindestens ein volumen-variables Zusatzelement (8) in jeder der Kammern (5, 6) befestigt oder unbefestigt angeordnet ist, sodass durch das volumen-variable Zusatzelement (8) und die Strömungsverbindung das Dämpfmaximum bei jedem möglichen Lastfall und/oder Einfederungszustand bei einer bestimmten Frequenz f_{An} liegt.

2. Gummilager nach Anspruch 1, **dadurch gekennzeichnet,**
**dass** bei radialer Auslenkung des Außenteiles (3) gegenüber dem Innenteil (2) die wirksame Pumpfläche in mindestens einer Kammer (5, 6) veränderbar ist.

3. Gummilager nach Anspruch 1 oder 2,
**dadurch gekennzeichnet,**
**dass** das volumen-variable Zusatzelement (8) aus kompressiblem Werkstoff hergestellt ist.

4. Gummilager nach Anspruch 1 oder 2,
**dadurch gekennzeichnet,**
**dass** das volumen-variable Zusatzelement (8) aus einem Zell-Kunststoff gebildet ist.

## Claims

1. Hydraulically damping rubber bearing, consisting of an inner part, an outer part, which is disposed concentrically with or eccentrically to and at a spacing from the latter, and a rubber part which is inserted in between and in which at least two chambers filled with damping medium are disposed, wherein at least two chambers are connected together via a flow connection, wherein the volumetric flexibility is variable in at least one chamber (5, 6),
**characterised in that**
at least one volumetrically variable auxiliary element (8) is disposed in a fastened or non-fastened manner in each of the chambers (5, 8), so that, by means of the volumetrically variable auxiliary element (8) and the flow connection, the damping maximum lies at a certain frequency f_{An} in each possible load case and/or spring deflection state.

2. Rubber bearing according to Claim 1, **characterised in that** the effective pumping area is variable in at least one chamber (5, 6) when the outer part (3) deflects radially relative to the inner part (2).

3. Rubber bearing according to Claim 1 or 2, **characterised in**
**that** the volumetrically variable auxiliary element (8) is made of compressible material.

4. Rubber bearing according to Claim 1 or 2, **characterised in**
**that** the volumetrically variable auxiliary element (8) is formed from a foamed plastics material.

## Revendications

1. Support en caoutchouc réalisant un amortissement hydraulique, constitué par une partie intérieure, une partie extérieure disposée concentriquement ou d'une manière excentrée et à distance de la partie intérieure et une partie en caoutchouc insérée entre ces parties et dans laquelle sont disposées au moins deux chambres remplies par un milieu d'amortissement, dans lequel au moins deux chambres sont reliées entre elles par l'intermédiaire d'une liaison d'écoulement, et dans lequel il existe une flexibilité de volume possible dans au moins une chambre (5, 6), **caractérisé en ce que**
au moins un élément supplémentaire à volume variable (8) est disposé en étant fixé ou non fixé dans chacune des chambres (5, 6) de sorte que sous l'effet de l'élément supplémentaire à volume variable (8) et de la liaison d'écoulement, le maximum d'amortissement se situe pour chaque cas de charge possible et/ou pour chaque état de contraction élastique, à une fréquence déterminée (f_{An}).

2. Support en caoutchouc selon la revendication 1, **caractérisé en ce que**,
dans le cas d'une déviation radiale de la partie extérieure (3) par rapport à la partie intérieure (2), la surface active de pompage peut être modifiée dans au moins une chambre (5, 6).

3. Support en caoutchouc selon la revendication 1 ou 2, **caractérisé en ce que**
l'élément supplémentaire à volume variable (8) est réalisé en un matériau compressible.

4. Support en caoutchouc selon la revendication 1 ou 2, **caractérisé en ce que**
l'élément supplémentaire à volume variable (8) est formé d'une matière plastique cellulaire.
